# EUROPÄISCHE PATENTSCHRIFT

(11) **EP 1 789 768 B1**
(45) Veröffentlichungstag und Bekanntmachung des Hinweises auf die Patenterteilung: **13.07.2011**
(21) Anmeldenummer: 05762833.1
(22) Anmeldetag: 23.05.2005
(51) Int. Cl.: G01N 1/00, G01N 1/28

(54) **AUTOMATISIERTES FILTRATIONSVERFAHREN UND FILTRATIONSSYSTEM ZUR VERFAHRENSDURCHFÜHRUNG**
AUTOMATED FILTRATION METHOD AND FILTRATION SYSTEM FOR CARRYING OUT SAID METHOD
PROCEDE DE FILTRATION AUTOMATISE ET SYSTEME DE FILTRATION POUR LA MISE EN OEUVRE DUDIT PROCEDE

(30) Priorität: 13.08.2004 DE 102004040248
(43) Veröffentlichungstag der Anmeldung: 30.05.2007
(73) Patentinhaber: Stiftung Alfred-Wegener-Institut für Polar- und Meeresforschung, 27570 Bremerhaven (DE)
(72) Erfinder: VAN DER LOEFF, Michiel, Rutgers, 27580 Bremerhaven (DE); VÖGE, Ingrid, 27612 Loxstedt (DE); LILIENTHAL, Heiko, 27607 Langen (DE)
(86) Internationale Anmeldenummer: PCT/DE2005/000955
(87) Internationale Veröffentlichungsnummer: WO 2006/015564

(56) Entgegenhaltungen:
- DE-A1- 19 836 292
- BUESSLER ET AL: "An intercomparison of small- and large-volume techniques for thorium-234 in seawater" MARINE CHEMISTRY, Bd. 74, Nr. 1, 2001, Seiten 15-28, XP002346414

## Beschreibung

Die vorliegende Erfindung bezieht sich auf ein automatisiertes Filtrationsverfahren zur kontinuierlichen Filtration von Wasserproben für die Analyse von Inhaltsstoffen und auf ein automatisiertes Filtrationssystem mit mehreren Filtern, mehreren Filtrationsbehältern und zumindest einer angesteuerten Pumpe für die Durchführung des Filtrationsverfahrens.

Eine automatisierte kontinuierliche Filtration von Wasserproben ist in vielen Anwendungsbereichen erforderlich, um den Wasserzustand und die Wasserzusammensetzung analysieren und überwachen zu können, dabei kann insbesondere durch die Automatisierung das Bedienpersonal eingeschränkt und eine hohe Kontinuität der Probenuntersuchungen, beispielsweise auch über Nacht, sichergestellt werden. Anwendungsbereiche sind zum Schutz der Umwelt beispielsweise die Wasseruntersuchungen in Wasser- und Klärwerken, die Abwasseruntersuchungen in chemischen Produktionsstätten und an Einleitungsstellen in öffentliche Gewässer und zur Erforschung der Umwelt Langzeituntersuchungen von Meerwasser im Bereich der Meeresbiologie, um beispielsweise den Partikelexport aus dem Bereich der Meeresoberfläche in tiefere Meeresschichten beobachten zu können. Beispielsweise wird das Isotop Thorium 234 (²³⁴Th) im Meerwasser aus dem Zerfall vom Uran-Isotop 238 (²³⁸U) produziert. Wenn keine Partikel vorhanden sind, liegt ²³⁴Th im isotopischen Gleichgewicht mit ²³⁸U gelöst vor. ²³⁴Th bindet sich aber rasch an Partikel und wenn Partikel aus der ozeanischen Deckschicht aussinken, nehmen sie ²³⁴Th mit und erzeugen so ein Defizit an ²³⁴Th in der Deckschicht. Die Messung von partikularem und gelöstem ²³⁴Th in der Deckschicht ermöglicht es daher, den Partikelexport in die Tiefe zu berechnen.

Aus der DE 198 36 292 A1 ist ein Filtrationsverfahren zur Probenentnahme bzw. Partikelentnahme, insbesondere in Meerwasser oder Süßwasser, bekannt, von der die vorliegende Erfindung als nächstliegende Stand der Technik ausgeht. Hierbei umfasst das Filtrationssystem einen von einem Motor angetriebenen Probenwechsler mit an diesem angeordneten Probeaufnahmeeinrichtungen in der Ausbildung von Filtern. Dabei ist der Probenwechsler derart bewegbar ausgebildet, dass die Filter nacheinander jeweils in eine Spülposition, eine Probeentnahmeposition und/oder eine Vergiftungsposition zum Konservieren der entnommenen Probe bringbar sind. In einem gezeigten Ausführungsbeispiel ist der Probenwechsler radförmig ausgebildet und weist 21 Filter auf. Durch Drehen des Probenwechslers werden die Filter in die aktive Position zur Durchführung der Verfahrensschritte gefahren. Weiterhin weist das Filtrationssystem wenigstens eine Pumpe auf, welche mittels entsprechender Leitungseinrichtungen derart an dem Filtrationssystem angeschlossen ist, dass die Pumpe wahlweise das Filtrationssystem umgebendes Fluid durch bzw. an einen an der Spülposition oder an der Probeentnahmeposition befindlichen Filter fördert. Die von der Pumpe geförderte Fluidmenge wird über einen Durchflussmesser bestimmt. Über eine Steuerelektronik, die über eine Kommunikationsschnittstelle mit vorbestimmten Zeiten und vorbestimmten Betriebsabläufen programmierbar ist, werden der Motor und die Pumpe automatisiert zu bestimmten Zeiten derart aktiviert, dass jeweils zu einer vorbestimmten Zeit wenigstens eine Spülung zumindest eines Filters und wenigstens eine Probeentnahme durch den jeweiligen Filter und/oder wenigstens eine Vergiftung des jeweiligen Filters erfolgt. Über einen Energiespeicher werden die Komponenten des Filtrationssystems mit Energie versorgt. Das Filtrationsverfahren umfasst entsprechend einen Spülschritt, einen Drehschritt zum Transportieren der Filter, einen Probenentnahmeschritt, einen weiteren Drehschritt, einen Vergiftungsschritt zum Konservieren der entnommenen Probe und einen weiteren Drehschritt zum Transportieren eines weiteren Filters in die Spülstellung.

Das bekannte Filtrationssystem wird in Tiefsee-Verankerungen beispielsweise von Forschungsschiffen aus eingesetzt, wo es über einen kürzeren oder längeren Zeitraum völlig autonom die im Meerwasser in einer vorbestimmten Tiefe enthaltenen Partikel detektiert. Die Automatisierung dient dabei der Verbesserung der Zuverlässigkeit der Messergebnisse und der Vereinfachung der Verfahrensdurchführung bezüglich Handhabung und Kostenaufwand.

Nachteilig bei dem bekannten Filtrationsverfahren ist jedoch, dass für jeden Filter immer nur eine Filtration mit unbehandeltem Meerwasser vorgesehen ist, sodass nur die Partikel erfasst werden können, die sich direkt aus dem Probenwasser herausfiltern lassen. Spezielle Substanzen im Wasser, beispielweise ²³⁴Th, treten aber sowohl in partikulärer als auch in gelöster Form im Meerwasser auf. Mit dem bekannten Filtrationsverfahren sind diese Substanzen nicht vollständig nachweisbar. Weiterhin bestimmt die Anzahl der zu verwendenden Filter den Durchmesser des radförmigen Probenwechslers der bekannten Filtrationsanlage, da alle Filter gleichzeitig in das Filterrad eingelegt sind. Da der Durchmesser des radförmigen Probenwechslers in der Verankerung jedoch stark begrenzt ist, kann keine sehr große Anzahl von Filtern gleichzeitig eingesetzt werden, wodurch wiederum die Einsatzdauer des Filtrationssystems bei häufigem Filterwechsel oder die Intervalldauer der Filterwechsel begrenzt sind. Schließlich werden die belasteten Filter durch Vergiftung konserviert. Da sie jedoch im Wasser verbleiben, ist eine Auslösung gebundener Partikel nicht zu vermeiden, wodurch Verfälschungen im Messergebnis entstehen können.

Die Aufgabe für die vorliegende Erfindung ist daherdarin zu sehen, eine Filtration von Substanzen mit unterschiedlicher Erscheinungsform in der Wasserprobe zu ermöglichen, wobei die unterschiedlichen Erscheinungsformen in verschiedenen Filtrationsvorgängen erfasst werden sollen. Dabei soll ein hoher Automatisierungsgrad bei gleichzeitiger Gewährleistung zuverlässiger Messergebnisse erreicht werden, ohne dass das Filtrationsverfahren oder die Filtrationsanlage sehr komplex, schwer handhabbar und kostenintensiv werden. Weiterhin soll ein autonomer Betrieb über einen möglichst langen Zeitraum unter relativ häufiger, kontinuierlicher Probennahme möglich sein. Die erfindungsgemäße Lösung für ein automatisiertes Filtrationsverfahren zur kontinuierlichen Filtration von Wasserproben für die Analyse von Inhaltsstoffen und für ein automatisiertes Filtrationssystem der eingangs beschriebenen Art ist dem Verfahrensanspruch 1 sowie dem Vorrichtungsanspruch 7 zu entnehmen. Vorteilhafte Weiterbildungen sind in den jeweiligen Unteransprüchen aufgezeigt, die im Folgenden im Zusammenhang mit der Erfindung näher erläutert werden.

Mit dem erfindungsgemäßen Filtrationsverfahren kann nunmehr eine vollautomatisierte Filtration von Wasserproben zur vollständigen und hochgenauen Detektion bestimmter Inhaltsstoffe direkt aus dem Meer erfolgen. Nach einer ersten Filtration der unbehandelten Wasserprobe, die beispielsweise direkt über eine Zuleitung zum Filtrationssystem, das beispielsweise auf einem Forschungsschiff auf See stationiert ist, gewonnen werden kann, werden der filtrierten Wasserprobe chemische Zusätze beigefügt und eine anschließende Fällung von gelösten und dann an die chemischen Zusätze adsorbierten Stoffen in dem Filtrat herbeigeführt. Die ausgefällten Stoffe werden in einer weiteren Filtration mit einem weiteren Filter ausgefiltert. Beide belasteten Filter können dann ohne weitere chemische oder mechanische Vorbehandlung mit einem Beta- oder Gamma-Zähler (Zähler für radioaktiven Zerfall) gemessen werden. Die spezifische Anwendung des erfindungsgemäßen Filtrationsverfahrens auf ²³⁴Th, dessen Aktivität im Meer zurzeit Gegenstand intensiver Forschungen ist, erlaubt die direkte Filtration von Seewasserproben in oberflächennahen Bereichen zunächst zur Herausfilterung von ²³⁴Th in partikulärer Erscheinungsform. Durch Zugabe von Chemikalien in das Filtrat (= vorgefilterte Seewasserprobe) kann dann ein MnO₂-Niederschlag erzeugt werden, der im Seewasser gelöstes ²³⁴Th quantitativ adsorbiert und zusammen damit ausfällt. Eine weitere Filtration des erzeugten MnO₂ führt dann zur Erfassung des zuvor gelösten 234Th, dessen Beta-Aktivität direkt gezählt werden kann. Beide Filtrationen zusammen garantieren die vollständige Erfassung von ²³⁴Th in partikulärer und gelöster Form in der Wasserprobe.

Aus der DE 198 42 667 B4 ist zwar ein Verfahren zum Einfangen von sauren oder basischen Substanzen, die in einem Gas, wie beispielweise der Atmosphäre, enthalten sind, unter Herstellung einer Probe zur Analysierung bekannt, bei dem die Probe zwei verschiedenen Filtrationsschritten in einer Einfangapparatur mit zwei verschiedenen Einfangelementen unterworfen wird, von denen aber nur eines als poröser Filter zur Detektion des basischen An#eil der zu untersuchenden Substanz in Form von Partikeln und Dunst ausgebildet ist. Das zweite Einfangelement arbeitet aber als adsorptive Flüssigkeit, ihm wird nicht das Filtrat sondern der in der ersten Filtration ausgefilterte Stoffanteil zugeführt. Damit arbeitet das bekannte Verfahren nach einer von der Erfindung vollständig anderen Chemie (Salzbildung, Adsorption) und nicht parallel sondern seriell. Es dient in der Hauptsache zur Detektion von schlecht riechenden Substanzen (basische Verbindungen wie Ammoniak und Amin, nachdem sie mit sauren Substanzen reagiert haben), in der Luft.

Weiterhin ist aus dem JGOFS-Programm (Joint Global Ocean Flux Study), Report No.12, July 1990 "Isotropic Tracers in U.S. JGOFS" ist einer **Veröffentlichung** von W.S. Moore "Sampling and Analytical Requirements for a Global Study" (Beitrag 11.14, pp. 106 - 110) ein Gedankenexperiment zur automatisierten Detektion von ²³⁴Th angegeben. Hierbei wird aber keine Filtration, sondern eine Absorption eingesetzt. Dabei wird ein Wasserstrahl über einen Schlauch durch verschiedene Mn-Fiberpakete, die gleichzeitig auf einer länglichen Grundplatte in einer Reihe angeordnet sind, hindurchgeleitet. Anschließend werden die belasteten Mn-Fiberpakete mit einem Betazähler ausgezählt. Somit wird ein zur Erfindung völlig anderer Lösungsweg beschritten, bei dem der Automationsgrad von der Anzahl der parallel eingesetzten Mn-Fiberpakete abhängig ist.

Weiterhin sind vollautomatische Aerosol-Probenahme-Geräte zum Einsatz auf Forschungsschiffen bekannt (vergleiche Prospektblatt "Vollautomatisches High-Volume-Aerosol-Probenahme-Gerät ISAP^{®}3000, im Internet abrufbar unter der Adresse http://www.isap.com/probe/aerosol-probenahme-geraet-isap-3000.html, Stand 29.06.2004, bei denen ein ereignisorientierter Filterwechsler (vergleiche **Prospektblatt** "Filterwechsler", im Internet abrufbar unter der Adresse http://www.derenda.de/produkte_filterwechsler_peltier.html, Stand 29.06.2004) aus einem Filtermagazin mit 31 Filtern erfolgt, wobei jeder Filter zur Kapazitätsausnutzung mehrfach einsetzbar ist. Das zugrundeliegende Filtrationsverfahren verfolgt aber wiederum eine grundsätzlich andere Chemie als das Filtrationsverfahren nach der Erfindung. Aus dem **Prospektblatt** "Digitel Aerosol Sammler DHA-80", im Internet abrufbar unter der Adresse http://www.digitel-ag.ch/dha80beschr.htm, Stand 29.06.2004, ist ein ähnliches Probenahmegerät bekannt, das über ein Filtermagazin mit 15 Filtern verfügt, die in Filterhaltern eingespannt sind. Diese werden mittels einer Wechselautomatik zur vorprogrammierten Zeit selbsttätig in die Beströmungsposition eingewechselt. Eine Aussage über die Funktionsweise des Filteraustauschs wird jedoch in keinem der genannten Prospektblätter gemacht. Ein automatischer Filterwechsler ist beispielsweise auch aus der Zusammenfassung zu der JP 2001 082407 A bekannt, hierbei handelt es sich jedoch um einen Manipulatorarm, mit dessen Hilfe die Filter ausgewechselt werden.

Die Ermittlung von partikulärem und gelösten Thorium erfolgte bislang vollständig manuell und ohne automatisierte Zwischenschritte. Die Probennahme, Probenbearbeitung, Zwischenreinigung wurden alle per Hand durchgeführt. Die in einem ersten Filtrationsschritt filtrierten Proben wurden dann in kanister gefüllt, in diese Kanister wurden mit Pipetten die Chemikalien zugesetzt und mit ausreichendem Schütteln der MnO₂-Niederschtag erzeugt. Die Kanister wurden dann an Filtereinheiten angeschlossen und der Inhalt filtriert, danach wurden die Filter einzeln herausgenommen, getrocknet, montiert und in Betazähler eingelegt. Die Kanister und Filtrationseinheiten wurden abschließend per Hand mit Säure und destilliertem Wasser gespült. Dem gegenüber sind bei dem automatisierten Filtrationsverfahren alle Schritte bis zum Erzeugen der zählbaren Filter vollständig automatisiert. Dadurch kann erheblich Arbeitszeit eingespart werden. Eine nahezu kontinuierliche Beprobung des Oberflächenwassers auf einer Expedition ist jetzt erstmals ohne Schichtbetrieb von mehreren Technikern möglich: eine einzige Person kann die Anlage als Nebentätigkeit betreuen. Eine Beprobung auf "Ships of opportunity" wird dadurch möglich. Weiterhin wird eine hohe Reproduzierbarkeit der Messergebnisse gegenüber dem-Handverfahren erreicht. Die Automatisierung bewirkt eine genaue Definition und Ausführung aller einzelnen Verfahrensschritte. Der bislang besonders kritische Spülvorgang kann so eingestellt werden, dass kein Übertrag von Reinigungsmitteln in die nächste Probe erfolgt. Wesentlich zu den Vorteilen des automatisierten Filtrationsverfahrens trägt auch die direkte Verknüpfung von Filtration und Betamessung in demselben Filterhalter bei. Die Filter werden in eine Fassung eingelegt, in der sie sowohl während der Filtration als auch während der Bestimmung der Beta-Aktivität verbleiben.

Durch eine Anwendung des automatisierten Filtrationsverfahrens für eine semikontinuierliche Bestimmung von partikulärem und gelöstem ²³⁴Th im Oberflächenwasser auf ozeanographischen Schnitten kann die geografische Verteilung der Exportproduktion (Export von Partikeln aus der euphotischen Zone in die Tiefe) ermittelt werden. Hierbei handelt es sich um einen wichtigen Parameter in der Erfassung des Kohlenstoffkreislaufes. Weiterhin kann eine Anwendung zu semilcontinuierlichen Filtration von Seewasser zur Bestimmung von Chlorophyll-a als notwendige Kalibrierung für die kontinuierliche Bestimmung der Fluoreszenz erfolgen, die durch Quenching eine Lichtabhängigkeit aufweist. Schließlich ist beispielsweise auch noch eine Fällung und Detektion von Radionukliden in Abwässern möglich.

Das automatisierte Filtrationsverfahren und das Filtrationssystem zur Verfahrensdurchführung werden beispielhaft nachfolgend anhand der **schematischen Figuren** noch näher zum weiteren Verständnis der Erfindung und deren Modifikationen erläutert. Dabei zeigt :
- **Figur 1**: eine Ansicht des automatisierten Filtrationssystems und
- **Figur 2**: ein Blockschaltbild des automatisierten Filtrationsverfahrens.

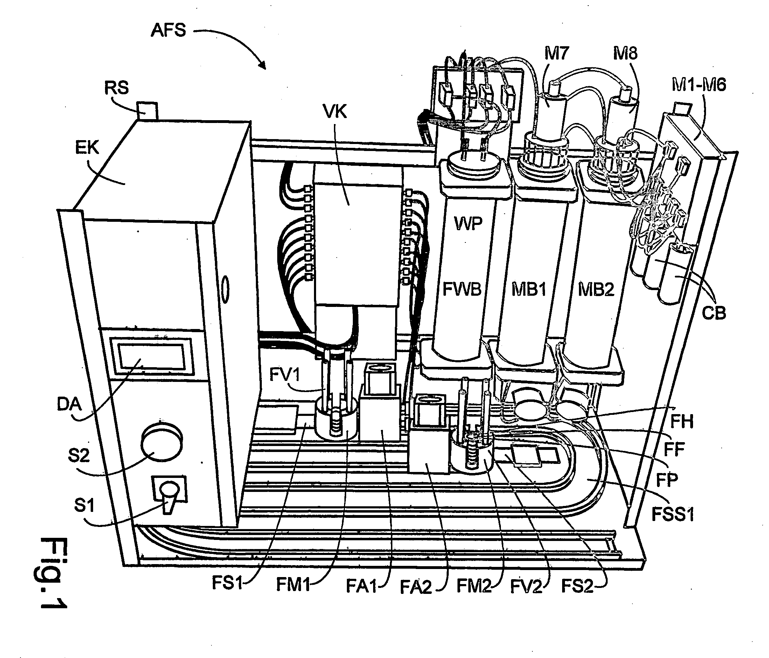

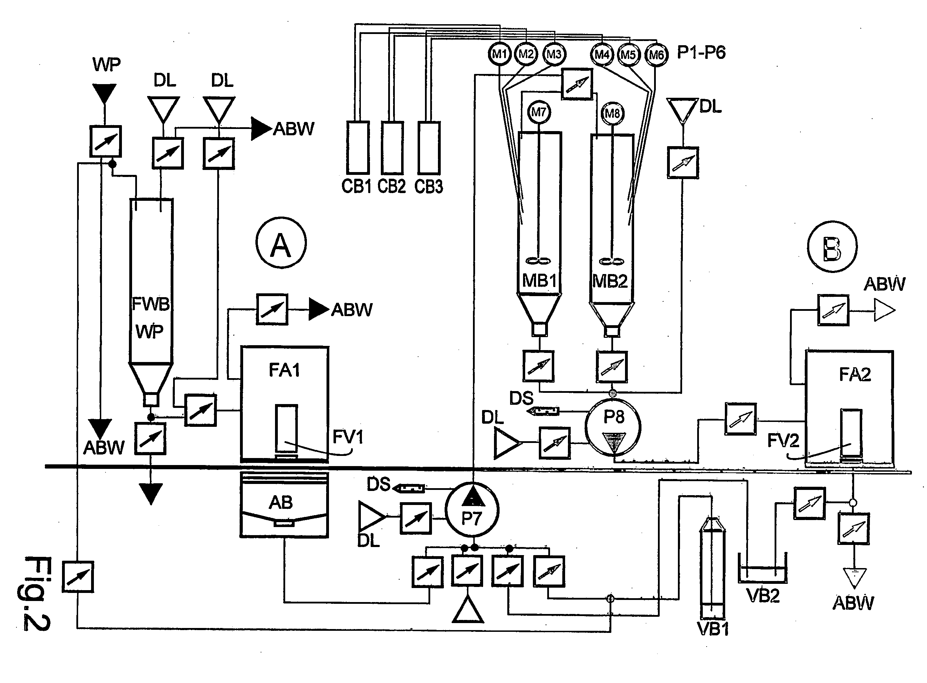

Die **Figur 1** zeigt ein automatisiertes Filtrationssystem **AFS** für die Durchführung eines automatisierten Filtrationsverfahrens zur kontinuierlichen Filtration von Wasserproben **WP** für die Analyse von Inhaltsstoffen mit einem Rahmengestell **RS,** in dem die verschiedenen Komponenten angeordnet sind. Im rechten Teil des Rahmengestells **RS** befindet sich ein Frischwasserdruckbehälter **FWB,** der direkt mit dem zu beprobenden Wasservorkommen verbunden werden kann (vergleiche **Figur 2**). Die frisch gewonnene Wasserprobe **WP** wird in dem Frischwasserdruckbehälter **FWB** gesammelt und von dort einem ersten Filtrationsbehälter **FA1** zugeführt (Filtration **A**). Dieser weist eine externe Filtervorrichtung **FV1** auf, die aus einem Filtermagazin **FM1** in Stapelform und einem Filterschieber **FS1** besteht. Über den Filterschieber **FS1** wird der jeweils unterste Filter **FF** (bestehend aus einem Filterhalter **FH** und einem Filterpapier **FP**) in den Filtrationsbehälter **PA1** eingeschoben. Nach Durchführung der Filtration **A** wird vor Beginn der nächsten Filtration **B** über den Filterschieber **FS1** der nunmehr zuunterst liegende Filter **FF** in den Filtrationsbehälter **FA** eingeschoben und dadurch der zuvor belastete filter **FF** in eine erste Führungsschiene **FSS1** zur Lagerung und späteren Entnahme geschoben.

Die im ersten Filtrationsbehälter **FA1** filtrierte Wasserprobe **WP** wird in einem Auffangbehälter **AB** zwischengelagert. Neben dem Frischwasserdruckbehälter **FWB** sind zwei Mischbehälter **MB1, B2** angeordnet, die alternierend betrieben werden können. Während in dem einen Mischbehälter **MB1** eine in Filtration **A** vorfiltrierte Wasserprobe **BP** mit Chemikalien versetzt wird, kann eine vorfiltrierte und bereits fertig aufbereitete Wasserprobe **WP** in dem anderen Mischbehälter **MB2** bereits einem zweiten Filtrationsbehälter **A2** zugeführt werden (Filtration **B**) oder umgekehrt. Der zweite Filtrationsbehälter **FA2** verfügt ebenfalls über eine externe Filtervorrichtung **FV2** mit einem Filtermagazin **FM2** in Stapelform und einem Filterschieber **FS2,** mit dem der unterste Filter **FF** in den Filtrationsbehälter **FB2** eingeschoben und nach der Filtration in einer zweite Führungsschiene **FSS2** eingeschoben wird. Das Funktionsprinzip der zweiten Filtration **B** entspricht dem der ersten Filtration **A.**

In den jeweils nicht aktuell benötigten Mischbehälter **MB1, MB2** wird aus Vorratsbehältern **CB** eine niederschlagsbildende Chemikalie über Motoren **M1-M6** für Chemiepumpen eingeleitet und dort über einen Motor **M7, M8** vermischt. Die Mischbehälter **MB1, MB2** werden vor einer erneuten Benutzung mit einer Mischung aus Salzsäure HCL und Wasserstoffperoxid H₂O₂ aus einem Vorratsbehälter **VB2** und mit destilliertem Wasser aus einem Vorratsbehälter **VB1** sowie mit Druckluft gespült und gereinigt. Weiterhin sind im automatisierten Filtrationssystem **AFS** ein Verteilerkasten **VK** für die entsprechenden Endschalter und Ventile (vergleiche **Figur 2**) und eine zentrale Recheneinheit **EK** mit Display **DA,** Hauptschalter **S1** und Not-Aus-Schalter **S2** zur automatischen Steuerung des Filtrationsverfahrens vorgesehen.

Anhand des Blockschaltbildes gemäß **Figur 2** kann eine Funktionsbeschreibung des automatisierten Filtrationssysfiems **AFS** gemäß **Figur 1** und-dem damit umsetzbaren automatisierten Filtrationsverfahren gegeben werden.

Die Filtrationen A und **B,** Filterwechsel und Spülvorgänge sind automatisiert. Alle Schaltungen, Ventile (in der **Figur 2** angedeutet durch schräge Pfeile), Pumpförderungen und weiteren Manipulationen werden pneumatisch mit Druckluft **DL** angetrieben. Filterhalter mit eingelegten Filtern werden von Hand in zwei Filtermagazine **FM1, FM2** eingelegt und nachgefüllt. Beim Systemstart werden die Filterhalter automatisch aus den Filtermagazinen in die Filtrationen **A** und **B** eingeschoben. Danach läuft folgender Verfahrensablauf vollautomatisch ab :
- Der Frischwasserdruckbehälter **FWB** wird mit einer Wasserprobe **WP,** beispielsweise Seewasser, gefüllt und mit Druckluft (0,05 MPa) in der Filtration A filtriert.
- Das Filtrat (= vorgefilterte Wasserprobe **WP**) wird in einem Auffangbehälter **AB** aufgefangen.
- Nach Ablauf der vorgegebenen Filtrationszeit wird eine eventuelle Restmenge an Flüssigkeit im Filtrationsbehälter **FA1** in einen Abwasserbereich **ABW** abgelassen, der Filter **FF** wird mit Druckluft trocken geblasen und der Filterhalter **FH** aus der Filtration **A** ausgeworfen und in einer Führungsschiene **SS1** gesammelt.
- Der Frischwasserdruckbehälter **FWB** wird nun automatisch mit destilliertem Wasser gereinige und nach einer vorgegebenen Zeit mit einer neuen Wasserprobe **WP** gefüllt.
- Das Filtrat wird aus dem Auffangbehälter **AB** mit einer pneumatischen Pumpe **P7** in den Mischbehälter **MB1** oder **MB2** befördert. Ein Rotor mit einem Motor M7 startet und die Chemikalienzugabe erfolgt aus drei Vorratsbehältern **CB1, CB2, CB3** über Schlauchpumpen **P1-P6** mit einstellbarer Pumpzeit. Nacheinander werden beim Nachweis von ²³⁴Th Lösungen von NH₃, KMnO₄ und MnCl₂ zugegeben.
- Nach dem Mischvorgang stoppt der Rotor. Nach einer einstellbaren Einwirkzeit wird die Filtration **B** durch Einschalten der pneumatischen Pumpe **P8** gestartet.
- Die Filtration **B** wird abgebrochen, wenn die Filtrationszeit (berechnet aus Probenintervall und der für alle weiteren Schritte benötigten Zeit) abgelaufen ist. Das filtrierte Volumen wird über einen Drucksensor **DS** ermittelt.
- Ein eventuelles Restvolumen wird in den Abwasserbereich **ABW** abgelassen, der Filter **FF** wird mit Druckluft trocken geblasen und der Filterhalter **FH** wird aus der Filtration **B** entfernt und in einher Führungsschiene **SS2** gesammelt.
- Der Mischbehälter **MB1** oder **MB2** und der Filtrationsbehälter **FA2** werden jetzt aus Vorratsbehälter **VB1, VB2** mit 1 M HCl (mit 10 ml/L H₂O₂) und anschließend dreimal mit destilliertem Wasser und mit Druckluft gespült.
- Ein neuer Filterhalter **FH** wird in die Filtration **B** eingeschoben und das automatisierte Filtrationsverfahren kann von vorne beginnen.
- Die in den Führungsschienen **SS1, SS2** gelagerten und entsprechend gekennzeichneten (Filtration **A** oder **B,** Daten der Probennahme) Filter **FF** werden von Hand im Filterhalter **FH** in einen entsprechenden Beta- oder Gamma-Zähler zur Detektion des vollständigen (partikulärer und gelöster Enteil) radioaktiven Thoriumgehalts in der aktuellen Wasserprobe WP eingelegt.

### Bezugsseichenliste

- **A, B**: Filtration
- **AB**: Auffangbehälter
- **ABW**: Abwasserbereich
- **AFS**: automatisiertes Filtrationssystem
- **CB**: Vorratsbehälter
- **DA**: Display
- **DL**: Druckluft
- **DS**: Drucksensor
- **EK**: zentrale Recheneinheit
- **FA**: Filtrationsbehälter
- **FF**: Filter
- **FH**: Filterhalter
- **FM**: Filtermagazin
- **FP**: Filterpapier
- **FS**: Filterschieber
- **FSS**: Führungsschiene
- **FV**: Filtervorrichtung
- **FWB**: Frischwasserdruckbehälter
- **M**: Motor
- **MB**: Mischbehälter
- **P**: Pumpe
- **RS**: Rahmengestell
- **S1**: Hauptschalter
- **S2**: Not-Aus-Schalter
- **VB**: Vorratsbehälter
- **VK**: Verteilerkasten
- **WP**: Wasserprobe

## Patentansprüche

1. Automatisiertes Filtrationsverfahren zur kontinuierlichen Filtration von Wasserproben für die Analyse von Inhaltsstoffen mit den rechnerunterstützt zyklisch wiederholbaren Verfahrensschritten :
• Füllen eines Frischwasserdruckbehälters (FWB) mit einer Wasserprobe (WP)
• Einschieben eines Filters (FF) in einen ersten Filtrationsbehälter (FA1)
• Durchführung einer ersten Filtration A mittels Durchpumpen der Wasserprobe (WP) durch den Filter (FF) in dem ersten Filtrationsbehälter (FA1)
• Auffangen der Wasserprobe (WP) in einem Auffangbehälter (AB)
• Trocknen, Ausschieben und Lagern des Filters (FF) aus dem ersten Filtrationsbehälter (FA1)
• Weiterpumpen der in der Filtration A vorfiltrierten Wasserprobe (WP) in einen Mischbehälter (MB1, MB2).
• Vermischen der Wasserprobe (WP) mit niederschlagsbildenden Chemikalien (CB)
• Einschieben eines Filters (FF) in einen zweiten Filtrationsbehälter (FA2)
• Durchführung einer zweiten Filtration B mittels Durchpumpen der vermischten Wasserprobe (WP) durch den Filter (FF) in dem zweiten Filtrationsbehälter (FA2)
• Entsorgen der Wasserprobe (WP) in einen Abwasserbereich (ABW)
• Trocknen, Ausschieben und Lagern des Filters (FF) aus dem zweiten Filtrationsbehälter (FA2)
• Leeren in einen Abwasserbereich (ABW) und Spülen des Frischwasserdruckbehälters (FWB) und des Mischbehälters (MB1, MB2)

2. Automatisiertes Filtrationsverfahren nach Anspruch 1,
**gekennzeichnet durch**
eine direkte Gewinnung der Wasserprobe (WP) aus oberflächennahem Meerwasser.

3. Automatisiertes Filtrationsverfahren nach Anspruch 1 oder 2,
**gekennzeichnet durch**
ein Weiterpumpen von zwei vorfiltrierten Wasserproben (WP) in zwei verschiedene Mischbehälter (MB1, MB2), wobei alternierend in dem einen Mischbehälter (MB1) die niederschlagsbildenden Chemikalien (CD) auf die Wasserprobe (WP) einwirken und aus dem anderen Mischbehälter (MM2) die fertig vermischte Wasserprobe (WP) in die Filtration B gepumpt wird.

4. Automatisiertes Filtrationsverfahren nach einem der Ansprüche 1 bis 3,
**gekennzeichnet durch**
eine pneumatische Energieversorgung (DL) der Pumpen (P) und aller weiteren angetriebenen Elemente (L,M).

5. Automatisiertes Filtrationsverfahren nach einem der Ansprüche 1 bis 4,
**gekennzeichnet durch**
einen zeitgesteuerten Durchlauf der einzelnen Verfahrensschritte.

6. Automatisiertes Filtrationsverfahren nach einem der Ansprüche 1 bis 5,
**gekennzeichnet durch**
eine Ermittlung des filtrierten Volumens der Wasserprobe (WP) **durch** einen Drucksensor (DS).

7. Automatisiertes Filtrationssystem (AFS) mit mehreren Filtern (FF), mehreren Filtrationsbehältern (FA) und zumindest einer angesteuerten Pumpe (P) für die Durchführung des automatisierten Filtrationsverfahrens zur kontinuierlichen Filtration von Wasserproben (WP) aus einem Wasservorkommen zur Analyse von Inhaltsstoffen nach einem der Ansprüche 1 bis 6,
**gekennzeichnet durch**
einen Frischwasserdruckbehälter (FWB), der direkt mit dem zu beprobenden Wasservorkommen und über einen ersten Filtrationsbehälter (FA1) mit einer externen Filtervorrichtung (FV1) zum automatischen Wechseln von Filtern (FF) aus einem Filtermagazin (FM) mit einem Auffangbehälter (AB) verbunden ist, und **durch** zwei Mischbehälter (MB1, MB2), die über eine erste Pumpe (P7) mit dem Auffangbehälter (AB) und mit je einem Vorratsbehälter (VB1, VB2) für zumindest eine Reinigungsflüssigkeit, über eine zweite Pumpe (P8) mit einem zweiten Filtrationsbehälter (FA2) mit einer externen Filtervorrichtung (FV2) zum automatischen Wechseln von Filtern (FF) aus einem weiteren Filtermagazin (FM2) und über jeweils eine weitere Pumpe (P1-P6) mit zumindest einem Vorratsbehälter (CB) für eine niederschlagsbildende Chemikalie verbunden sind, wobei der Frischwasserdruckbehälter (FWB) und die Mischbehälter (MB1, MB2) mit einer Abwasserentsorgung (ABW) verbunden sind und die Energieversorgung von einer Druckluftstation (DL) sowie die Ansteuerung der Pumpen (P) und Verbindungen über Ventile über eine zentrale Recheneinheit (EK) erfolgt.

8. Automatisiertes Filtrationssystem (AFS) nach Anspruch 7,
**gekennzeichnet durch**
eine Filtervorrichtung (FV) bestehend aus einem vertikalen Filtermagazin (FM) mit einzelnen Filtern (FF) aus einem Filterpapier (FP) und einem Filterhalter (FH) und mit einem Filterschieber (FS) zum Einschieben des untersten Filters (FF) in den Filtrationsbehälter (FA) und zum Ausschieben des belasteten Filters (FF) aus dem Filtrationsbehälter (FA) in eine Führungsschiene (FSS) hinter dem Filtrationsbehälter (FA).

9. Automatisiertes Filtrationssystem (AFS) nach Anspruch 7 oder 8,
**gekennzeichnet durch**
Filtermagazine (FM) in Stapelform.

## Claims

1. An automated filtration method for continuous filtration of water samples for the analysis of components, said method comprising the following computer-assisted, cyclically repeatable method steps:
• filling a fresh water pressure vessel (FWB) with a water sample (WP)
• sliding a filter (FF) into a first filtration vessel (FA1)
• carrying out a first filtration process A by pumping the water sample (WP) through the filter (FF) in the first filtration vessel (FA1)
• collecting the water sample (WP) in a collection vessel (AB)
• drying, removing and storing the filter (FF) from the first filtration vessel (FA1)
• further pumping the water sample (WP), which was pre-filtered in the filtration process A, into a mixing vessel (MB1, MB2)
• mixing the water sample (WP) with precipitation-forming chemicals (CB)
• sliding a filter (FF) into a second filtration vessel (FA2)
• carrying out a second filtration process B by pumping the mixed water sample (WP) through the filter (FF) in the second filtration vessel (FA2)
• disposing of the water sample (WP) in a waste water area (ABW)
• drying, removing and storing the filter (FF) from the second filtration vessel (FA2)
• emptying into a waste water area (ABW) and rinsing the fresh water pressure vessel (FBW) and the mixing vessel (MB1, MB2).

2. The automated filtration method according to claim 1,
**characterised by**
a direct recovery of the water sample (WP) from near-surface seawater.

3. The automated filtration method according to either claim 1 or claim 2,
**characterised by**
further pumping two pre-filtered water samples (WP) into two different mixing vessels (MB1, MB2), the precipitation-forming chemicals (CD) acting on the water sample (WP) in one of the mixing vessels (MB1) and, alternatingly, the finished, mixed water sample (WP) being pumped from the other mixing vessel (MB2) in the filtration process B.

4. The automated filtration method according to any one of claims 1 to 3,
**characterised by**
a pneumatic energy supply (DL) of the pumps (P) and all further driven elements (L, M).

5. The automated filtration method according to any one of claims 1 to 4,
**characterised by**
a time-controlled execution of the individual method steps.

6. The automated filtration method according to any one of claims 1 to 5,
**characterised by**
a determination of the filtered volume of the water sample (WP) by a pressure sensor (DS).

7. An automated filtration system (AFS) comprising a plurality of filters (FF), a plurality of filtration vessels (FA) and at least one controlled pump (P) for carrying out the automated filtration method for continuous filtration of water samples (WP) from a water resource for the analysis of components according to any one of claims 1 to 6,
**characterised by**
a fresh water pressure vessel (FWB) which is connected directly to the water resource to be tested and is connected to a collection vessel (AB) via a first filtration vessel (FA1) comprising an external filter device (FV1) for automatically changing filters (FF) from a filter magazine (FM), and by two mixing vessels (MB1, MB2) which are connected via a first pump (P7) to the collection vessel (AB) and each to a storage vessel (VB1, VB2) for at least one cleaning fluid, are connected via a second pump (P8) to a second filtration vessel (FA2) comprising an external filter device (FV2) for automatically changing filters (FF) from a further filter magazine (FM2), and are connected via a respective further pump (P1-P6) to at least one storage vessel (CB) for a precipitation-forming chemical, the fresh water pressure vessel (FWB) and the mixing vessels (MB1, MB2) being connected to a waste water disposal (ABW), the energy being supplied by a pneumatic station (DL), and the pumps (P) and connections being controlled by valves via a central processing unit (EK).

8. The automated filtration system (AFS) according to claim 7,
**characterised by**
a filtering device (FV) consisting of a vertical filter magazine (FM) comprising individual filters (FF) made of a filter paper (FP) and a filter frame (FH), and comprising a filter slide (FS) for sliding the lowermost filter (FF) into the filtration vessel (FA) and for ejecting the charged filter (FF) out of the filtration vessel (FA) into a guide rail (FSS) behind the filtration vessel (FA).

9. The automated filtration system (AFS) according to either claim 7 or claim 8,
**characterised by**
a filter magazine (FM) in stacked form.

## Revendications

1. Procédé de filtration automatisé pour la filtration continue d'échantillons d'eau pour l'analyse des composants, avec les étapes de procédés cycliquement répétables assistées par ordinateur :
• Remplissage d'un réservoir sous pression d'eau fraîche (WP) avec un échantillon d'eau (EE)
• Insertion d'un filtre (FF) dans un premier réservoir de filtration (FA1)
• Réalisation d'une première filtration A par pompage de l'échantillon d'eau (WP) à travers le filtre (FF) dans le premier réservoir de filtration (FA1)
• Collecte de l'échantillon d'eau (WP) dans un réservoir de collecte (AB)
• Séchage, sortie et stockage du filtre (FF) issu du premier réservoir de filtration (FA1)
• Pompage ultérieur de l'échantillon d'eau (WP) préfiltré en filtration A dans un réservoir de mélange (MB1, MB2)
• Mélange de l'échantillon d'eau (WP) avec des produits chimiques (CB) créant des précipitations
• Insertion d'un filtre (FF) dans un deuxième réservoir de filtration (FA2)
• Réalisation d'une deuxième filtration B par pompage de l'échantillon d'eau (WP) à travers le filtre (FF) dans le deuxième réservoir de filtration (FA2)
• Evacuation de l'échantillon d'eau (WP) dans une zone pour eaux usées (ABW)
• Séchage, sortie et stockage du filtre (FF) issu du deuxième réservoir de filtration (FA2)
• Vidange dans une zone d'eaux usées (ABW) et rinçage du réservoir sous pression d'eau fraîche (FWB) et du réservoir de mélange (MB1, MB2).

2. Procédé de filtration automatisé selon la revendication 1,
**caractérisé par**
une récupération directe de l'échantillon d'eau (WP) à partir d'eau de mer proche de la surface.

3. Procédé de filtration automatisé selon la revendication 1 ou 2,
**caractérisé par**
un pompage ultérieur de deux échantillons d'eau (WP) préfiltrés dans deux différents réservoirs de mélange (MB1, MB2), en alternative dans l'un des réservoirs de mélange (MB1), les produit chimiques créant des précipitations (CD) agissant sur l'échantillon d'eau (WP) et l'échantillon d'eau (WP) totalement mélangé étant pompé dans la filtration B à partir de l'autre réservoir de mélange (MM2).

4. Procédé de filtration automatisé selon l'une quelconque des revendications 1 à 3,
**caractérisé par**
une alimentation en énergie pneumatique (DL) des pompes (P) et de tous les autres éléments entraînés (L, M).

5. Procédé de filtration automatisé selon l'une quelconque des revendications 1 à 4,
**caractérisé par**
un passage en temps commandé de chaque étape du procédé.

6. Procédé de filtration automatisé selon l'une quelconque des revendications 1 à 5,
**caractérisé par**
une détermination du volume filtré de l'échantillon d'eau (WP) par un capteur de pression (DS).

7. Système de filtration automatisé (AFS) avec plusieurs filtres (FF), plusieurs réservoirs de filtration (FA) et au moins une pompe amorcée (P) pour la réalisation du procédé de filtration automatisé pour la filtration continue d'échantillons d'eau (WP) d'un plan d'eau pour l'analyse des composants selon l'une quelconque des revendications 1 à 6,
**caractérisé par**
un réservoir sous pression d'eau fraîche (FWB), qui est relié directement avec le plan d'eau à tester et par l'intermédiaire d'un premier réservoir de filtration (FA1) avec un dispositif de filtration externe (FV1) pour le changement automatique de filtres (FF) à partir d'un magasin de filtres (FM) avec un réservoir de collecté (AB) et par deux réservoirs de mélange (MB1, MB2), qui par l'intermédiaire d'une première pompe (P7) sont reliés au réservoir de collecte (AB) et avec chaque fois un réservoir de stockage (VB1, VB2) pour au moins un liquide de nettoyage, par l'intermédiaire d'une deuxième pompe (P8) avec un deuxième réservoir de filtration (FA2) avec un dispositif de filtration externe (FV2) pour le changement automatique de filtres (FF) à partir d'un deuxième magasin de filtres (FM2) et par l'intermédiaire d'une pompe supplémentaire (P1-P6) avec au moins un réservoir de stockage (CB) pour un produit chimique créant des précipitations, le réservoir sous pression d'eau fraîche (FWB) et les réservoirs de mélange (MB1, MB2) étant reliés avec une évacuation d'eaux usées (ABW) et l'alimentation en énergie s'effectuant à partir d'un poste d'air comprimé (DL) et l'amorçage des pompes (P) et liaisons s'effectuant par l'intermédiaire de soupapes, via une unité centrale d'ordinateur (EK).

8. Système de filtration automatisé (AFS) selon la revendication 7,
**caractérisé par**
un dispositif de filtration (FV) consistant dans un magasin de filtres vertical (FM) avec des filtres individuels (FF), dans un papier filtrant (FP) et dans un porte-filtre (FH) et avec un coulisseau de filtration (FS) pour insérer le filtre inférieur (FF) dans le réservoir de filtration (FA) et pour extraire le filtre chargé (FF) hors du réservoir de filtration (FA) dans une glissière (FSS) derrière le réservoir de filtration (FA).

9. Système de filtration automatisé (AFS) selon la revendication 7 ou 8,
**caractérisé par**
des magasins de filtres (FM) en forme de piles.
